**Europäisches Patentamt**

(19) **European Patent Office**

**Office européen des brevets**

(11) Publication number : **0 467 804 B1**

# (12) EUROPEAN PATENT SPECIFICATION

(45) Date of publication of patent specification :
25.10.95 Bulletin 95/43

(51) Int. Cl.⁶ : **G01N 21/53, G01N 21/85**

(21) Application number : **91420250.2**

(22) Date of filing : **15.07.91**

(54) **Optical detector for equipment for measuring a substance in a liquid.**

(30) Priority : **17.07.90 IT 5314990 U**

(43) Date of publication of application :
**22.01.92 Bulletin 92/04**

(45) Publication of the grant of the patent :
**25.10.95 Bulletin 95/43**

(84) Designated Contracting States :
**AT BE CH DE DK ES FR GB GR IT LI LU NL SE**

(56) References cited :
EP-A- 0 059 140
EP-A- 0 120 565
EP-A- 0 231 652

(56) References cited :
US-A- 4 136 818
US-A- 4 243 883
**MEDICAL AND BIOLOGICAL ENGINEERING &**
**COMPUTING, vol. 25, no. 3, May 1987, Steven-**
age, Herts., GB, pp. 317-323 ; J.S. WILKINSON
et al. : "Continuous measurement of blood
hydration during ultrafiltration using optical
methods"

(73) Proprietor : **HOSPAL AG**
**Dornacherstrasse 8**
**CH-4008 Basel (CH)**

(72) Inventor : **Caleffi, Adamo**
**Via B. Buozzi No.3**
**I-41037 Mirandola (Modena) (IT)**

## Description

This invention relates to an optical detector for equipment for measuring a substance in a liquid.

In particular this invention is advantageously used in equipment for measuring the haemoglobin in whole blood flowing in an extracorporeal circuit connected to the vascular system of a patient subjected to a blood treatment (dialysis, oxygenation, etc.).

EP 0 059 140 describes a device for detecting a substance in a liquid flowing in a pipe, comprising a body having two parallel seats, a first seat for a transparent pipe where the liquid containing the substance is circulated and a second seat for a transparent pipe for a reference liquid. A source of light radiation is located in a recess between the two seats so that the light radiation emitted can cross each pipe and hit a photo detector located along each pipe, opposite the source of light radiation. Both detectors are connected to a differential amplifier.

US 4 136 818 describes a device for holding a transparent tube in the optical path in a slot in a top surface of an optical sensor for detecting the amount of light passing through said tube and for shielding light from external sources from said optical sensor.

EP 0 120 565 describes a transducer mounting assembly, for use in conjunction with apparatus for measuring the percentage of solid particles in a suspension flowing through a pipe, including a hinged collar capable of being secured around a section of the pipe. A radiant energy source is mounted at a first position on the circumference of the collar for radiating diffused radiant energy into the pipe. A first radiant energy detector is mounted at a second position on the circumference of the collar for sensing diffused energy in the pipe which is forward-scattered when a suspension flows there through. A second radiant energy detector is mounted at a third position on the circumference of the collar adjacent the first position for sensing diffused energy in the pipe which is back-scattered by a suspension flowing there through.

Other detectors known in the art include a clamp having a seat for a transparent tube which is closed in order to secure the tube when measurements are being made. The clamp comprises a source of radiation having a specific wavelength and an optical sensor to detect the intensity of the radiation which is not absorbed by the substance to be measured present in the liquid flowing in the tube. The wavelength is selected to be selectively absorbed by this substance.

Such optical detectors are reliable for the measurement of a substance in a liquid when the attenuation of the light propagating through the liquid is caused only by absorption. In this case, the wavelength of the light and the optical path length being known, it is possible to calculate the concentration of the substance by applying Beer's law :

$$P_2 = P_1 e^{-\varepsilon cL}$$

where $P_1$ is the incident power, $P_2$ the power remaining in the light beam after traveling a distance L through the liquid containing the substance to be measured, c the concentration of the substance and $\varepsilon$ its coefficient of absorption, this coefficient being a function of the wavelength. This law applies, in particular, to the determination of the hæmoglobin concentration in hæmolysed blood, i.e. in blood where the red cells have been destroyed, thereby releasing their hæmoglobin.

These optical detectors lose however part of their interest when the attenuation of light through the liquid is not exclusively caused by absorption, the concentration of the substance to be measured being no longer calculable by Beer's law. That is the case in particular when the substance to be measured is hæmoglobin in whole blood since the attenuation of light propagating through whole blood is due to a complex combination of absorption and scattering, the latter being principally due to reflection and refraction of light by red cells which cause multiple changes in the direction of propagation.

One object of the invention is therefore to provide an optical detector capable, in particular, of considerably reducing the undesirable scattering effect of light in a liquid containing a substance to be measured and thus of delivering a signal enabling an accurate determination of the concentration of the substance.

According to the invention, this object is achieved by an optical detector for equipment for measuring a substance in a liquid present in a transparent receptacle said detector comprising a body having a seat for the receptacle, a source of light radiation and an optical sensor aligned transversally with respect to the seat and being housed in respective recesses in the body so as to be oriented towards the receptacle received in the seat, characterised in that the seat has a seat surface reflecting said light radiation.

Thanks to this characteristic, the accuracy of the above mentioned type of detector is considerably improved. For instance, with an haemoglobin detector according to the invention, it is possible to measure the haemoglobin concentration in whole blood with an average deviation of only about 2,5 % with respect to the corresponding measurement in hæmolised blood, whereas with a conventional detector this deviation is about of 16%.

For a better understanding of the invention a preferred embodiment of the optical detector provided by way of example will be described below with the help of the appended drawings in which :

Figure 1 is a perspective view of a detector according to the invention in the open position ;

Figure 2 shows a transverse cross-section of the detector in the closed position ; and

Figure 3 is the cross-section in Figure 2 in the open position.

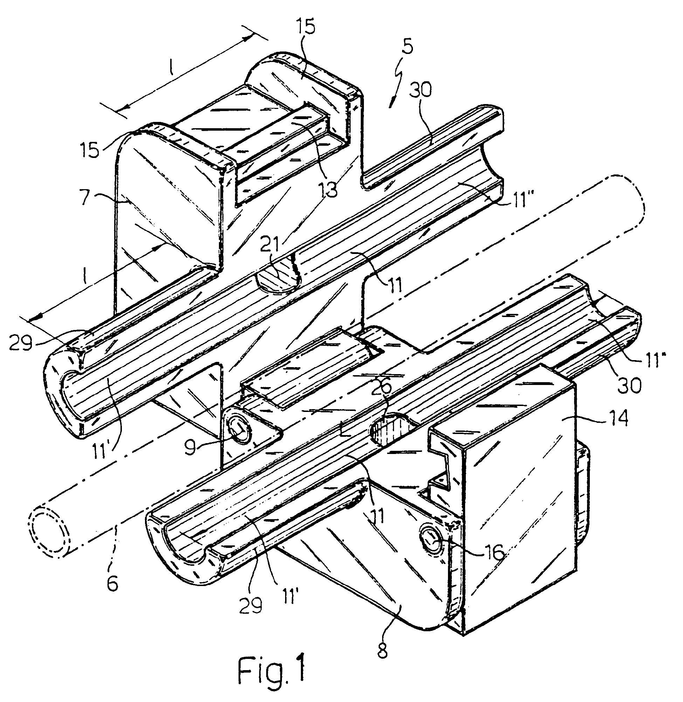

With reference to Figure 1, numeral 5 generally

indicates an optical detector for equipment for measuring the haemoglobin in the blood flowing in a tube for clinical purposes 6, indicated by dotted and dashed lines. Tube 6 has an approximately constant circular cross-section, and is made of a flexible transparent plastics material, for example polyvinyl chloride (PVC). This is capable of being connected in a known way to the vascular system of a patient, for example a patient subjected to dialysis.

Detector 5 comprises a body in two parts, namely a base 8 and a cover 7, made of a material (plastics, metal, etc.) which is opaque to light, so as to prevent the passage of any light or infra red radiation.

The base 8 and a cover 7 are hinged together by means of a pin 9 and jointly delimit a substantially cylindrical seat 11 capable of housing tube 6. They mate together in a diametrical plane 12 with respect to seat 11, with the result that the portion of seat 11 in each part of the body is a half cylinder. The seat 11 extends outside the body of the detector in two protruding members 29, 30 extending respectively from the lateral sides of the body. Each protruding member 29, 30 comprises two semi-tubular parts integral respectively with the cover 7 and the base 8 and delimiting jointly one extremity 11′, 11″ of the seat 11.

Advantageously, the protruding members 29 and 30 are of a length such that the total length of the seat 11, 11′, 11″ of detector 5 is at least about four times the diameter of tube 6. This in general has a diameter of the order of 6,5 mm. In particular the length of each protruding member 29 and 30 is of the same order of magnitude as the width "1" of the body 7, 8. For example the width of the body 7, 8 may be of the order of 20 mm, so that the total width "L" of the entire detector 5 may be of the order of 60 mm.

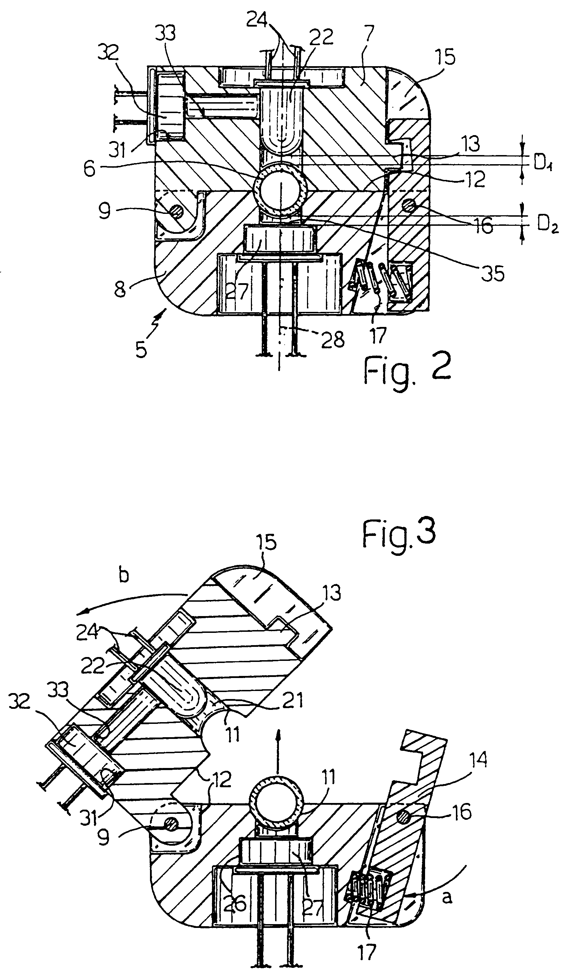

Thanks to these protruding members 29 and 30, when detector 5 is closed (figure 2), a substantial length of tube 6 is secured in a straight line. Also protruding members 29 and 30 ensure that interfering radiation (for example ambient light) entering tube 6 from the exterior is substantially absorbed by diffusion before reaching the middle part of the seat 11, where the light-emitting and sensing elements of the detector are located, as described hereafter.

According to the invention, the internal surfaces of the seat 11, 11′, 11″ are treated so as to be reflective, for example by coating or by polishing. In this way the effect of scattering in the liquid is considerably minimised, given that these seats behave as pure reflectors in relation to the radiation diverted by the corpuscular components present in the substance being measured.

Cover 7, on the side opposite pin 9, is provided with a rib 13 capable of being engaged by a hook 14. The latter hinges on a pin 16 in base 8 and is pressed in an anticlockwise direction by a compression spring 17 (Figure 2). When hook 14 is engaged with rib 13 it remains housed between the two flanges 15 of cover 7, while cover 7 and base 8 are held closed securing any tube 6 inserted between them.

By pressing on hook 14 in the direction of arrow "a" in Figure 3 in order to overcome the reaction force exerted by spring 17, hook 14 is disengaged from rib 13, with the result that cover 7 can be opened, rotating it in the direction of arrow "b". Used tube 6 can therefore be removed from seat 11 and another can be inserted.

Cover 7 is provided with a recess 21 in which is housed a source 22 of light radiation having a selected wavelength lying in a restricted field of the infrared spectrum. As a matter of fact, at wavelengths in the near infra-red, the major absorbing components of blood are hæmoglobin (Hb) and oxyhaemoglobin ($HbO_2$). At a wavelength between 805 nm and 810 nm, the absorption coefficients of the two components are equal. At this isobestic wavelength, light absorption will not be affected by conversion between Hb and $HbO_2$, but will depend upon the sum of the concentrations of the two components.

For example a light emitting diode, subsequently referred to as an LED (Light Emitting Diode) may be used in the cover 7, and this LED is connected by means of conductors 24 to an electrical circuit (not shown) of the measuring equipment.

Correspondingly base 8 is provided with a recess 26 in which is housed an optical sensor 27, for example a photo diode or photo transistor. This is capable of responding to the intensity of the light radiation received which is the part of the radiation emitted from LED 22 which is not absorbed by the blood which flows in tube 6.

Sensor 27 therefore delivers a signal of a level corresponding to this intensity. As this absorption is due to the hæmoglobin, the level of the signal emitted from sensor 27 may be used by the measuring equipment (not shown) to provide a measure of the concentration of this hæmoglobin.

Recess 21 and 26 are located in the cover 7 and base 8 in such a way that when the detector is closed LED 22 and sensor 27 are aligned along an axis 28 which is perpendicular with respect to seat 11, and therefore with respect to tube 6. Axis 28 is also normal to contact plane 12.

Cover 7 is also provided with a recess 31 in which is held another optical sensor 32. Recess 31 extends into a cylindrical hole 33 perpendicular to axis 28, which enables sensor 32 to receive radiation directly from LED 22. Sensor 32 is connected to a known electronic correction circuit which enables the said equipment to correct the measurement provided on the base of the optical deterioration by LED 22.

In order that tube 6 may have the effect of a cylindrical lens, it is suitably positioned with respect to an emission source or a point towards which it is desired that the beam should be focused. In particular the anterior end of LED 22 and tube 6 are spaced apart by

a length $D_1$ such that the light rays issued by LED 22 impinging on the curved surface of tube 6 are approximately concentrated at a focal point located in the axis of a tube 6 itself. Sensor 27 is also located at a distance $D_2$ from tube 6 so that the light rays after leaving the said focusing point are refracted by tube 6 when they are incident on the internal surface of said tube 6 and arrive approximately parallel at a sensitive surface 35 of sensor 27.

It is to be understood that various modifications and improvements may be made to detector 5 described without going beyond scope of the claims.

## Claims

1. An optical detector for equipment for measuring a substance in a liquid present in a transparent receptacle (6), said detector comprising a body (7, 8) having a seat (11, 11′, 11″) for the receptacle (6), a source (22) of light radiation and an optical sensor (27) aligned transversally with respect to the seat and being housed in respective recesses (21, 26) in the body (7, 8) so as to be oriented towards the receptacle received in the seat, characterised in that the seat (11, 11′, 11″) has a seat surface reflecting said light radiation.

2. An optical detector according to claim 1, characterised in that the receptacle is a tube (6).

3. An optical detector according to claim 2, characterised in that the body comprises two parts (7, 8) hinged together and capable of mating together in order to delimit a substantially cylindrical seat (11, 11′, 11″) for a portion of the tube (6).

4. An optical detector according to claim 2 or 3, characterised in that the total length (L) of the seat (11, 11′, 11″) is at least about four times the diameter of the said tube (6).

5. An optical detector according to one of claims 2 to 4, characterised in that the light source (22) is located at a first distance ($D_1$) from the tube (6) and the sensor (27) is located at a second distance ($D_2$) from the tube (6), the first distance ($D_1$) being such that the light rays emitted by the source (22) impinging on the tube (6) are approximately concentrated at a focal point located on an axis of the tube (6), the second distance ($D_2$) being such that the light rays departing from the said focal point and incident on the internal surface of the said tube (6) arrive approximately parallel at a sensitive surface (35) of the said sensor (27).

6. An optical detector according to one of claims 1 to 5, characterised in that it includes an additional sensor (33) for receiving light radiation directly from the source (32) in order to provide a reference signal corresponding to the light emitted by the source (32).

7. A hæmoglobin detector according to one of claims 1 to 6, the wavelength of the light source (32) being selected in the near infrared.

## Patentansprüche

1. Optischer Detektor für Geräte zum Messen einer Substanz in einer in einem durchsichtigen Behälter (6) vorliegenden Flüssigkeit, wobei der Detektor einen Körper (7, 8) mit einer Aufnahme (11, 11′, 11″) für den Behälter (6), eine Lichtstrahlungsquelle (22) sowie einen optischen Sensor (27) umfaßt, die quer zu der Aufnahme ausgerichtet und so in entsprechenden Ausnehmungen (21, 26) im Körper (7, 8) untergebracht sind, daß sie auf den in der Aufnahme aufgenommenen Behälter gerichtet sind, dadurch gekennzeichnet, daß die Aufnahme (11, 11′, 11″) eine die Lichtstrahlung reflektierende Aufnahmefläche aufweist.

2. Optischer Detektor nach Anspruch 1, dadurch gekennzeichnet, daß es sich bei dem Behälter um eine Röhre (6) handelt.

3. Optischer Detektor nach Anspruch 2, dadurch gekennzeichnet, daß der Körper zwei aneinander angelenkte Teile (7, 8) umfaßt, die so zusammengefügt werden können, daß sie dadurch eine im wesentlichen zylindrische Aufnahme (11, 11′, 11″) für einen Teil der Röhre (6) abgrenzen.

4. Optischer Detektor nach den Ansprüchen 2 oder 3, dadurch gekennzeichnet, daß die Gesamtlänge (L) der Aufnahme (11, 11′, 11″) mindestens das Vierfache des Durchmessers der Röhre (6) beträgt.

5. Optischer Detektor nach den Ansprüchen 2 bis 4, dadurch gekennzeichnet, daß die Lichtquelle (22) in einem ersten Abstand ($D_1$) von der Röhre (6) angeordnet ist und der Sensor (27) in einem zweiten Abstand ($D_2$) von der Röhre (6) angeordnet ist, wobei der erste Abstand ($D_1$) so bemessen ist, daß die von der Quelle (22) ausgesandten, auf die Röhre (6) auftreffenden Lichtstrahlen annähernd an einem auf einer Achse der Röhre (6) angeordneten Brennpunkt gebündelt werden und der zweite Abstand ($D_2$) so bemessen ist, daß die sich von dem Brennpunkt entfernenden und auf die Innenfläche der Röhre (6) auftreffenden Lichtstrahlen annähernd parallel an einer empfindlichen Oberfläche (35) des Sensors (27)

**6.** Optischer Detektor nach den Ansprüchen 1 bis 5, dadurch gekennzeichnet, daß er einen zusätzlichen Sensor (33) zum direkten Empfang der Lichtstrahlung von der Quelle (32) her enthält, um ein dem von der Quelle (32) ausgesandten Licht entsprechendes Bezugssignal zur Verfügung zu stellen.

**7.** Hämoglobindetektor nach den Ansprüchen 1 bis 6, wobei die Wellenlänge der Lichtquelle (32) im nahen Infrarot gewählt wird.

**Revendications**

**1.** Un détecteur optique pour un équipement pour mesurer une substance dans un liquide présent dans un récipient transparent (6), le détecteur comprenant un corps (7, 8) ayant un siège (11, 11′, 11″) pour le récipient (6), une source (22) de radiations lumineuses et un capteur optique (27) alignés transversalement par rapport au siège et logés dans des évidements respectifs (21, 26) dans le corps (7, 8) de façon à être orienté en direction du récipient logé dans le siège, caractérisé en ce que le siège (11, 11′, 11″) a une surface de siège réfléchissant la radiation lumineuse.

**2.** Un détecteur optique selon la revendication 1, caractérisé en ce que le récipient est un tube (6).

**3.** Un détecteur optique selon la revendication 2, caractérisé en ce que le corps comprend deux parties (7, 8) articulées l'une à l'autre et aptes à se joindre pour délimiter un siège sensiblement cylindrique (11, 11′, 11″) pour une portion du tube (6).

**4.** Un détecteur optique selon la revendication 2 ou 3, caractérisé en ce que la longueur totale (L) du siège (11, 11′, 11″) est au moins quatre fois supérieure au diamètre du tube (6).

**5.** Un détecteur optique selon une des revendications 2 à 4, caractérisé en ce que la source de lumière (22) est logée à une première distance ($D_1$) du tube (6) et le capteur (27) est logé à une seconde distance ($D_2$) du tube (6), la première distance ($D_1$) étant telle que les rayons lumineux émis par la source (22) frappant le tube (6) sont approximativement concentrés en un point focal situé sur l'axe du tube (6), la seconde distance ($D_2$) étant telle que les rayons lumineux s'écartant du point focal et incidents à la surface interne du tube (6) arrivent approximativement parallèlement à une surface sensible (35) du capteur (27).

**6.** Un détecteur optique selon une des revendications 1 à 5, caractérisé en ce qu'il comprend un capteur additionnel (33) pour recevoir la radiation lumineuse directement de la source (32) afin de fournir un signal de référence correspondant à la lumière émise par la source (32).

**7.** Un détecteur d'hémoglobine selon une des revendications 1 à 6, où la longueur d'ondes de la source lumineuse est choisie dans le proche infrarouge.

Fig.1

Fig. 2

Fig. 3